# EUROPÄISCHE PATENTSCHRIFT

(11) **EP 2 652 307 B1**
(45) Veröffentlichungstag und Bekanntmachung des Hinweises auf die Patenterteilung: **18.05.2016**
(21) Anmeldenummer: 11794174.0
(22) Anmeldetag: 13.12.2011
(51) Int. Cl.: F02M 37/10, F02M 37/14, B60K 15/03

(54) **KRAFTSTOFF-FÖRDEREINHEIT**
FUEL DELIVERY UNIT
UNITÉ DE TRANSPORT DE CARBURANT

(30) Priorität: 17.12.2010 DE 102010054883
(43) Veröffentlichungstag der Anmeldung: 23.10.2013
(73) Patentinhaber: Continental Automotive GmbH, 30165 Hannover (DE)
(72) Erfinder: BENNER, Hans-Guenter, 65830 Kriftel (DE); PAUER, Bernd, 65817 Eppstein (DE)
(86) Internationale Anmeldenummer: PCT/EP2011/072503
(87) Internationale Veröffentlichungsnummer: WO 2012/080199

(56) Entgegenhaltungen:
- EP-A1- 1 884 653
- DE-A1- 4 336 574
- DE-A1- 19 956 143
- DE-A1-102008 005 522

## Beschreibung

### Kraftstoff-Fördereinheit

Gegenstand der Erfindung ist eine Kraftstoff-Fördereinheit in einem Kraftstoffbehälter eines Kraftfahrzeugs, bestehend aus einem Schwalltopf, einer darin angeordneten Kraftstoffpumpe, zum Fördern von Kraftstoff aus dem Schwalltopf zu einer Brennkraftmaschine des Kraftfahrzeugs, einem Pumpenhalter zur Befestigung der Kraftstoffpumpe in dem Schwalltopf und einem Füllstandsensor zur Ermittlung des Füllstandes im Kraftstoffbehälter.

Kraftstoff-Fördereinheiten ähnlicher Bauart sind aus den Dokumenten EP 1 1884 653 A1 und DE 199 56 143 A1 bekannt.

In Abhängigkeit von der Form des Kraftstoffbehälters werden ein oder mehrere Füllstandsensoren verwendet. Ein Füllstandsensor befindet sich immer im Bereich des Schwalltopfes. Während die weiteren Füllstandsensoren im Kraftstoffbehälter befestigt sind, ist es bei dem im Bereich des Schwalltopfes befindlichen Füllstandsensor üblich, diesen am Schwalltopf zu befestigen. Hierzu sind an der Außenseite des Schwalltopfes zusätzliche Halterungen, Klipse oder ähnliche Befestigungselemente zur Aufnahme des Füllstandsensors angeordnet. Der Durchmesser der Kraftstoff-Fördereinheit wird bestimmt durch den Durchmesser der Öffnung im Kraftstoffbehälter, durch die die Montage der Kraftstoff-Fördereinheit erfolgt. Infolgedessen verringert sich der Durchmesser des Schwalltopfes durch die an der Außenseite des Schwalltopfes angeordneten Halterungen für den Füllstandsensor. Diese Verringerung des Durchmessers bedingt ein kleineres Volumen des Schwalltopfes. Das Volumen des Schwalltopfes erfährt darüber hinaus eine weitere Verringerung, da der Schwalltopf an einer Seite abgeflacht ist. Diese von der Kreisform abweichende Querschnittsgestaltung des Schwalltopfes ist erforderlich, damit der an der Außenseite angeordnete Füllstandsensor zusammen mit dem Schwalltopf durch die Öffnung im Kraftstoffbehälter montieren werden kann. Da das Volumen des Schwalltopfes oftmals vorgegeben ist, besitzen herkömmliche Schwalltöpfe zum Ausgleich eine große Bauhöhe. Sie sind daher für den Einsatz in Kraftstoffbehältern mit geringen Bauhöhen nicht einsetzbar. Darüber hinaus ist die Montage der Kraftstoff-Fördereinheit nicht unproblematisch. Aufgrund der eingeschränkten Platzverhältnisse im Kraftstoffbehälter wird die Kraftstoff-Fördereinheit fertig vormontiert, bevor sie in den Kraftstoffbehälter eingesetzt wird. Aufgrund des außen am Schwalltopf angeordneten Füllstandsensors muss die Kraftstoff-Fördereinheit zur Vermeidung von Beschädigungen besonders vorsichtig in den Kraftstoffbehälter eingesetzt werden. Dies ist zeitaufwendig, und Beschädigungen lassen sich nicht vollständig ausschließen.

Der Erfindung liegt die Aufgabe zugrunde, eine Kraftstoff-Fördereinheit zu schaffen, deren Schwalltopf eine möglichst geringe Bauhöhe aufweist und die sich einfach und trotzdem zuverlässig in den Kraftstoffbehälter einsetzen lässt.

Gelöst wird die Aufgabe dadurch, dass der Füllstandsensor am Pumpenhalter angeordnet ist.

Mit der Anordnung des Füllstandsensors am Pumpenhalter ist der Füllstandsensor nunmehr im Schwalltopf und nicht mehr an dessen Außenseite angeordnet. Aufgrund dessen lässt sich der Schwalltopf mit einem größeren Querschnitt gestalten, wodurch ein größeres Volumen erzielt wird. Weiter erlaubt die Anordnung des Füllstandsensors am Pumpenhalter einen größeren Freiraum bei der Gestaltung der Befestigungselemente für den Füllstandsensor. Aufgrund der ohnehin komplexen Gestalt des Pumpenhalters führen die zusätzlich am Pumpenhalter vorzusehenden Befestigungselemente zu keiner wesentlichen Erhöhung der Komplexität und damit der Kosten. Darüber hinaus hat die Anordnung des Füllstandsensors innerhalb des Schwalltopfes den Vorteil, dass Beschädigungen des Füllstandsensors beim Einsetzen der Kraftstoff-Fördereinheit in den Kraftstoffbehälter aufgrund der geschützten Lage vermieden werden.

In einer vorteilhaften Ausgestaltung besitzt der Pumpenhalter Befestigungselemente, vorzugsweise Aufnahmen und/oder Klipse, mit denen der Füllstandsensor am Pumpenhalter angeordnet und befestigt ist.

Um eine Demontage des Füllstandsensors zu Wartungs- oder Reparaturarbeiten zu ermöglichen, sind gemäß einer weiteren Ausgestaltung die Befestigungselemente für eine lösbare Verbindung des Füllstandsensors mit dem Pumpenhalter ausgebildet.

Eine sichere Anordnung der Befestigungselemente am Pumpenhalter wird dadurch erreicht, dass diese einteilig mit dem Pumpenhalter verbunden sind. Sofern der Pumpenhalter ein Spritzgussteil aus Kunststoff ist, lassen sich die Befestigungselemente in einfacher Weise im gleichen Arbeitsgang während des Spritzgießens des Pumpenhalters herstellen.

Um den Füllstand im Kraftstoffbehälter messen zu können, muss der den Schwimmer tragende Hebelarm aus dem Bereich des Pumpenhalters über den oberen Rand des Schwalltopfes in den Kraftstoffbehälter führen. Um die Länge des Hebelarms und damit das Gewicht und die Kosten gering zu halten, ist der erfindungsgemäße Füllstandsensor bezogen auf die Einbaulage im oberen Bereich des Pumpenhalters angeordnet.

Eine noch weitere Verringerung der Länge des Hebelarms wird dadurch erreicht, wenn die Befestigungsmittel an einer Strebe des Pumpenhalters angeordnet sind, wobei sich die Strebe vom Pumpenhalter in Richtung Flansch und somit nach oben erstreckt. Diese Ausgestaltung ist insbesondere dann von Vorteil, wenn der Pumpenhalter vom oberen Bereich des Schwalltopfes entfernt in der Mitte des Schwalltopfes angeordnet ist.

An mehreren Ausführungsbeispielen wird die Erfindung näher erläutert. Es zeigen:
- Fig. 1:: eine schematische Darstellung einer Kraftstoff-Fördereinheit nach dem Stand der Technik,
- Fig. 2:: den Schwalltopf der Kraftstoff-Fördereinheit,
- Fig. 3:: eine weitere Ausgestaltung eines Pumpenhalters in einer schematischen Darstellung.

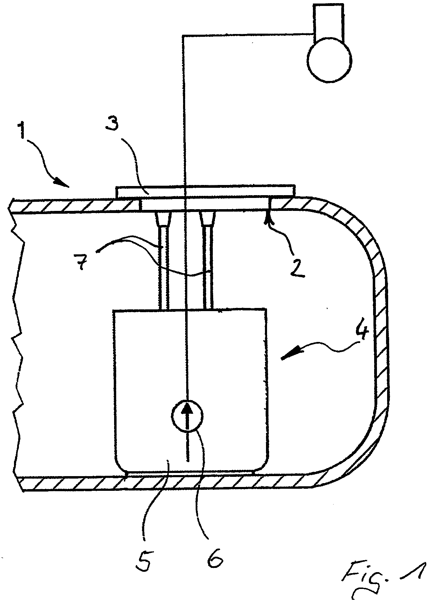

Figur 1 zeigt einen Kraftstoffbehälter 1 mit einer Öffnung 2, die von einem Flansch 3 verschlossen wird. Durch die Öffnung 2 wird die Kraftstoff-Fördereinheit 4 in den Kraftstoffbehälter 1 eingebracht und anschließend im Innern montiert. Die Kraftstoff-Fördereinheit besteht aus einem Schwalltopf 5 mit einer darin angeordneten Kraftstoffpumpe 6, der mittels Abstützelemente 7 mit dem Flansch 3 verbunden ist und von diesen gegen den Boden des Kraftstoffbehälters 1 vorgespannt wird.

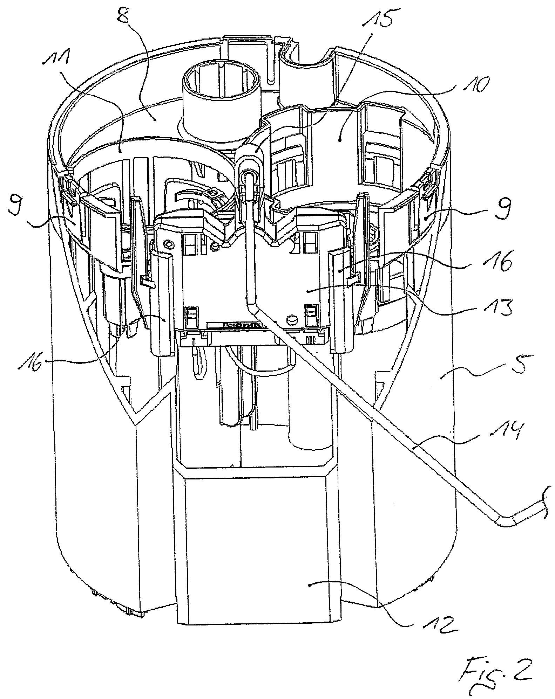

Im Schwalltopf 5 in Figur 2 weist einen Pumpenhalter 8 auf, der bezogen auf die Einbaulage im oberen Bereich des Schwalltopfes 5 angeordnet ist. Zur Fixierung des Pumpenhalters 8 am Schwalltopf 5 hat der Pumpenhalter 8 zwei Rasthaken 9, die mit in entsprechende Raststufen des Schwalltopfes 5 verrasten. Der Pumpenhalter 8 weist zwei kreisförmige Ausnehmungen 10, 11 in welche die hier nicht dargestellte Kraftstoffpumpe und ein Filter eingesetzt werden. Der Querschnitt des Schwalltopfes 5 ist im Wesentlichen kreisförmig. Lediglich an einer Seite besitzt der Schwalltopf 5 eine Abflachung 12 an der ein Füllstandsensor 13 angeordnet ist. Der Füllstandsensor 13 besitzt einen nicht dargestellten Schwimmer, der an einem Hebeldraht 14 befestigt ist. Der Hebeldraht 14 ist in einem Bügel 15 drehbar gelagert. Der Bügel 15 steht mit einem Widerstandsnetzwerk in Verbindung, welches in Abhängigkeit vom Schwenkwinkel des Hebeldrahtes 14 elektrische Signale für den Füllstand generiert.

Zur Anordnung des Füllstandsensors 13 besitzt der Pumpenhalter 8 als Aufnahmen 16 ausgebildete Befestigungselemente, in die der Füllstandsensor 13 eingesetzt und arretiert ist. Die Aufnahmen 16 sind einteilig mit dem Pumpenhalter 8 ausgebildet und befinden sich im oberen Bereich des Pumpenhalters 8, so dass der Hebeldraht 14 über den Rand des Schwalltopfes 5 in den Kraftstoffbehälter 1 hineinragt.

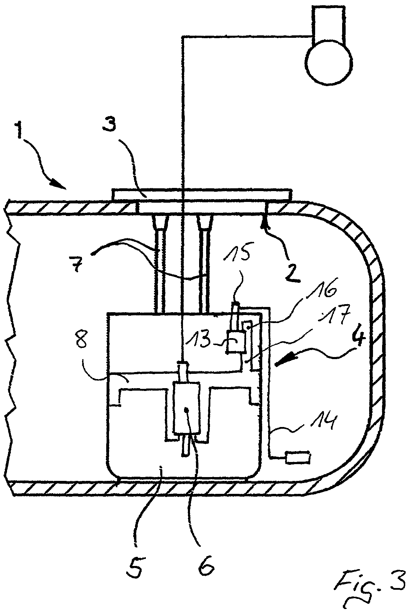

Der Pumpenhalter 8 in Figur 3 ist gegenüber dem Pumpenhalter in Figur 2 geringfügig abgewandelt. Der Pumpenhalter 8 besitzt eine in Richtung Flansch 3 gerichtete Strebe 17, die über den oberen Rand des Schwalltopfes 5 hinausragt. An dieser Strebe 17 ist der Füllstandsensor 13 angeordnet.

## Patentansprüche

1. Kraftstoff-Fördereinheit in einem Kraftstoffbehälter eines Kraftfahrzeugs, bestehend aus einem Schwalltopf, einer darin angeordneten Kraftstoffpumpe, zum Fördern von Kraftstoff aus dem Schwalltopf zu einer Brennkraftmaschine des Kraftfahrzeugs, einem Pumpenhalter zur Befestigung der Kraftstoffpumpe in dem Schwalltopf und einem Füllstandsensor zur Ermittlung des Füllstandes im Kraftstoffbehälter, **dadurch gekennzeichnet , dass** der Füllstandsensor (13) am Pumpenhalter (8) angeordnet ist.

2. Kraftstoff-Fördereinheit nach Anspruch 1, **dadurch gekennzeichnet, dass** der Pumpenhalter (8) Befestigungselemente (16), vorzugsweise Aufnahmen und/oder Klipse, besitzt, mit denen der Füllstandsensor (13) am Pumpenhalter (8) befestigt ist.

3. Kraftstoff-Fördereinheit nach Anspruch 2, **dadurch gekennzeichnet, dass** die Befestigungselemente (16) für eine lösbare Verbindung des Füllstandsensors (13) mit dem Pumpenhalter (8) ausgebildet sind.

4. Kraftstoff-Fördereinheit nach Anspruch 2 oder 3, **dadurch gekennzeichnet, dass** die Befestigungselemente (16) einteilig mit dem Pumpenhalter (8) verbunden sind.

5. Kraftstoff-Fördereinheit nach zumindest einem der vorhergehenden Ansprüche, **dadurch gekennzeichnet, dass** der Füllstandsensor (13) bezogen auf die Einbaulage im oberen Bereich des Pumpenhalters (8) angeordnet ist.

6. Kraftstoff-Fördereinheit nach zumindest einem der Ansprüche 1 bis 4, **dadurch gekennzeichnet, dass** die Befestigungsmittel (16) an einer Strebe (17) des Pumpenhalters (8) angeordnet sind, wobei sich die Strebe (17), vom Pumpenhalter (8) in Richtung Flansch (3) erstreckt.

## Claims

1. Fuel delivery unit in a fuel tank of a motor vehicle, comprising a surge pot, a fuel pump arranged therein for delivering fuel from the surge pot to an internal combustion engine of the motor vehicle, a pump holder for fixing the fuel pump in the surge pot and a fill level sensor for determining the fill level in the fuel tank, **characterized in that** the fill level sensor (13) is arranged on the pump holder (8).

2. Fuel delivery unit according to Claim 1, **characterized in that** the pump holder (8) has fixing elements (16), preferably receivers and/or clips with which the fill level sensor (13) is fastened to the pump holder (8).

3. Fuel delivery unit according to Claim 2, **characterized in that** the fixing elements (16) are formed for detachable connection of the fill level sensor (13) with the pump holder (8).

4. Fuel delivery unit according to Claim 2 or 3, **characterized in that** the fixing elements (16) are connected integrally with the pump holder (8).

5. Fuel delivery unit according to at least one of the preceding claims, **characterized in that** the fill level sensor (13) is arranged in the upper region of the pump holder (8) in relation to the installation position.

6. Fuel delivery unit according to at least one of Claims 1 to 4, **characterized in that** the fixing means (16) are arranged on strut (17) of the pump holder (8), wherein the strut (17) extends from the pump holder (8) in the direction of the flange (3).

## Revendications

1. Unité de transport de carburant dans un réservoir de carburant d'un véhicule automobile, composée d'un pot de compensation, d'une pompe à carburant disposée dans celui-ci, pour le transport de carburant du pot de compensation à un moteur à combustion interne du véhicule automobile, d'un support de pompe pour la fixation de la pompe à carburant dans le pot de compensation et d'un détecteur de niveau de remplissage pour déterminer le niveau de remplissage dans le réservoir de carburant, **caractérisée en ce que** le détecteur de niveau de remplissage (13) est disposé sur le support de pompe (8).

2. Unité de transport de carburant selon la revendication 1, **caractérisée en ce que** le support de pompe (8) comporte des éléments de fixation (16), de préférence des logements et/ou des attaches, avec lesquels le détecteur de niveau de remplissage (13) est fixé au support de pompe (8).

3. Unité de transport de carburant selon la revendication 2, **caractérisée en ce que** les éléments de fixation (16) sont configurés en vue d'un assemblage séparable du détecteur de niveau de remplissage (13) avec le support de pompe (8).

4. Unité de transport de carburant selon la revendication 2 ou 3, **caractérisée en ce que** les éléments de fixation (16) sont reliés d'une seule pièce au support de pompe (8).

5. Unité de transport de carburant selon au moins une des revendications précédentes, **caractérisée en ce que** le détecteur de niveau de remplissage (13) est disposé, par rapport à la position de montage, dans la région supérieure du support de pompe (8).

6. Unité de transport de carburant selon au moins une des revendications 1 à 4, **caractérisée en ce que** les moyens de fixation (16) sont disposés sur une entretoise (17) du support de pompe (8), dans laquelle l'entretoise (17) s'étend à partir du support de pompe (8) en direction d'une plaque (3).
